# EUROPEAN PATENT SPECIFICATION

(11) **EP 1 517 463 B1**
(45) Date of publication and mention of the grant of the patent: **06.08.2008**
(21) Application number: 03021260.9
(22) Date of filing: 19.09.2003
(51) Int. Cl.: H04B 17/00, H04B 7/005

(54) **Radio link check**
Funkverbindungskontrolle
Test d'une liaison radio

(43) Date of publication of application: 23.03.2005
(73) Proprietor: Sony Ericsson Mobile Communications AB, 221 88 Lund (SE)
(72) Inventor: Lindell, Bo, 181 46 Lidingö (SE); Pensjö, Tomas, 177 60 Järfälla (SE)
(74) Representative: Dahnér, Christer

(56) References cited:
- WO-A-01/24418
- US-A1- 2001 046 867
- US-B1- 6 266 527

## Description

### TECHNICAL FIELD OF THE INVENTION

The present invention relates to radio link check in a portable communication device. More particularly it relates to a method and a device for radio link check in a portable communication device for a user to be able to choose a more favourable location for radio link connection.

### BACKGROUND

It is well known that in radio communication systems including base stations and mobile terminals communicating with each other on radio links, calls typically in fringe areas can be lost due to bad radio link preformace, in some cases even without a warning to a user, which of course causes problems, or at least irritation to the user of a mobile terminal. Often, it is not possible for the user to select a location which has better radio conditions, whereby radio link performance' is just a matter of coincidence.

### DESCRIPTION OF RELATED ART

There are several conventional techniques for selecting a location with better radio conditions. For example, base station strength, i. e. the strength of the radio link from the base station to the mobile terminal is often shown graphically on a display of the mobile terminal. The base station signal strength indicates a so-called "down-link" connection, which unfortunately is normally of little help where coverage is bad, since the radio link from the mobile terminal up to the base station, the so-called "up-link" is often the weakest link, i. e. the real cause of the bad radio link performance. Therefore, the known solution only taking the down-link signal strength in account to select better radio conditions is not satisfactory.

US 6 266 5271, shows a telecommunications system and method for measuring the bit error rate (BER) and power on up-link and down-link channels substantially simultaneously from a mobile terminal to enable real time analysis in the field. This can be accomplished by including an application within a memory in the mobile terminal, which can initiate Link Balance (LB) start and stop commands sent from the mobile terminal to the base station. The LB start command is sent from the MS to the base station, instructing the base station to measure the power and BER on the up-link and forward these measurements to the mobile terminal. Simultaneously, the mobile terminal can measure the power and BER on the down-link and determine the current location. The up-link measurements, down-link measurements, and location information can then be displayed to the technician in real time.

There is thus a need to solve the problem with the signal strength of the weakest radio link to secure a better determination of better radio conditions.

### SUMMARY OF INVENTION

The present invention is thus directed towards solving the problem with the radio signal strength including the weakest radio link.

This is achieved by using both down- and uplink signal strength to provide determination of better radio conditions.

One object of the present invention is to provide a method for communication link check using both down- and uplink signal strength.

According to a first aspect of this invention, this object is achieved by a method for communication link check in a portable communication device, said method comprising the steps of:
- receiving information including power control commands from a base station on a first link;
- monitoring said first link for base station signal strength and power control commands;
- providing a first signal strength representation signal based on base station signal strength;
- providing a second signal strength representation signal based on the power control commands; and
- combining said first and second representation signals to provide a third signal strength representation signal which is transmitted.
transmitting the third signal strength representation signal (R3) as audible noise presented to a user presentation unit within the portable communication device for communication link check (212), such that a user of the portable communication device can find the third signal strength representation signal (R3) decreases when the user moves to a more favorable location as regards both up-link and down-link radio signal conditions.

Thus, the invention provides signal strength representation using both the down-link as well as the uplink, which improves determination of actual signal strength including also the weakest link.

A second aspect of the present invention is directed towards a method including the features of the first aspect, in which the said first and second signal strength representation signals are noise signals.

A third aspect of the present invention is directed towards a method including the features of the first aspect, in which the step of combining said first and second signal strength representation signals includes adding said noise signals.

A fourth aspect of the present invention is directed towards a method including the features of the third aspect wherein the third signal is presented visually as well.

Another object of the present invention is to provide a communication link check device for a portable communication device, that easily enables a user to find a location having better radio conditions.

According to a fifth aspect of the present invention, this object is achieved by:
a communication link check device for a portable electronic device device, said communication link check device comprising:
   - a receiver unit provided for receiving information including a power control signal from a base station on a first link;
   - a monitoring unit connected to said receiver unit for monitoring said first link for base station signal strength and power control;
   - a first signal generating unit connected to said receiver unit, said first signal generating unit being arranged to provide a first signal strength representation signal based on the base station signal strength;
   - a second signal generating unit connected to said receiver unit, said second signal generating unit being arranged to provide a second signal strength representation signal based on the power control signal;
   - a combining unit connected to said first and second signal generating units arranged to combine the first and second signal strength representation signals to a third signal strength representation signal; and
   - a control unit connected to the receiver unit, first and second signal generating units and combining unit for control thereof and being arranged to provide the third signal as audible noise presented to a user presentation unit within the portable communication device for communication link check, such that a user of the portable communication device can find the third signal strength representation signal decreases when the user moves to a more favorable location as regards both up-link and down-link radio signal conditions.

A sixth aspect of the present invention is directed towards a communication link check device comprising the features of the fifth aspect, wherein the first first and second signal generating units are noise generating units.

An seventh aspect of the present invention is directed towards a communication link check device comprising the features of the fifth or the sixth aspect, wherein the user presentaion unit is an audio user output and/or a visual user presentation unit.

According to a eigth aspect of the present invention, there is provided a portable communication device comprising:
a communication link check device for a comprising the features of the fifth aspect

A tenth aspect of the present invention is directed towards a portable communication device, wherein the device is a cellular phone, a smart phone or a PDA.

### The present invention has the following advantages over the state of the art:

Firstly, by also using the power control signal transmitted from the base station to the mobile station, the uplink, which is typically the weakest link, is also monitored so that a user can find a better location having better radio conditions. The power control signal can be used to represent the uplink radio conditions, since this signal is depending on the transmission on the uplink. The base station instructs the mobile station to increase or decrease transmission power in a way known per se.

Secondly, since a better location can be found with sufficent up- and downlinks, transmit power in the portable electronic device can be less to save battery, as well as reduce interference on neighboring channels.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 shows a communication link check device for a portable communication device; and
Fig. 2 shows a method for communication link check in a portable communication device.

### DETAILED DESCRIPTION OF THE EMBODIMENTS

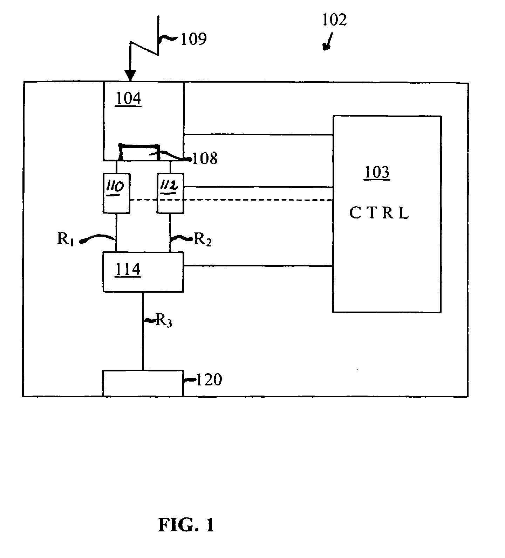

Reference will now be given to Fig. 1 showing a communication link check device according to one preferred embodiment of the invention. In this figure, the communication link check device 102 is controlled by a control unit 103 included in said communication link check device, 102. Said communication link check device 102 also comprises a receiver unit 104 provided for communication with a base station (not shown) in a way known per se. The communication link check device 102 also includes a monitoring unit 108 for monitoring a first link 109 for base station signal strength and power control commands, and is connected to or located within the receiver unit, 104. The communication link check device 102 further comprises a first signal strength representation signal generating unit 110 connected to the receiver unit 104, preferably a first noise generating unit for providing a first signal strength representation signal R₁, preferably a first noise signal based on the base station signal strength. The communication link check device 102 further comprises a second signal strength representation signal generating unit 112 connected to the receiver unit 104, preferably a second noise generating unit for providing a second signal strength representation signal R₂, typically a second noise signal, based on conventional power control commands received from the base station in a way known per se. Furthermore, the communication link check device comprises a signal combining unit 114 for combining the first and second signal strength representation signals R₁ and R₂, i.e. in this embodiment the first and second noise signals to a third signal strength representation signal R₃ provided for link check, typically audible link check by means of transmitting the third signal strength representation signal R₃ to a user audio output 120.

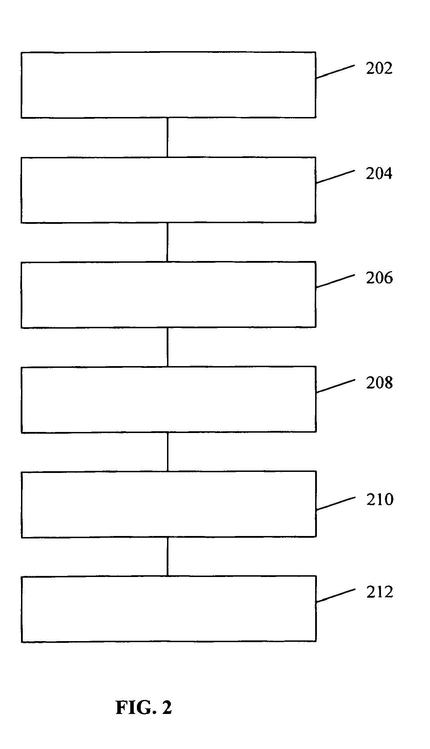

Fig. 2 presents a flow-chart of one embodiment of a method for communication link check in a portable communication device. Reference will also be given to Fig. 1.

With reference to Fig. 1 and Fig. 2, the method for communication link check will now be explained. This method starts by from an incoming radio signal receiving information including a power control signal from a base station on a first link 109 (the so-called down-link), step 202, by means of a receiver unit 104, in a way known per se, as shown in Fig. 1. It is assumed that the receiver unit 104 receives the radio signal and demodulates it in a way known per se, which will therefore not be described in more detail herein. Thereafter, the monitoring unit 108 monitors the first link 109 for base station signal strength, step 204.

In the first signal generating unit 110, preferably a first noise generating unit connected to said receiver unit 104, the first signal strength representation signal R₁, preferably a first noise signal based on the base station signal strength is generated, typically in a way known per se, step 206.

In the second signal generating unit 112, preferably a second noise generating unit connected to said receiver unit 104, the second signal strength representation signal, preferably a second noise signal based on the received power control signal, is generated, step 208. The power control signal is a conventional power control signal sent from the base station to the communication link control device for controlling transmitted up-link power, i. e. the signal from a portable communication device including the communication link check device according to the invention. The power control signal is received and decoded in a way known per se, which will therefore not be described in more detail and can be transformed into a noise signal or other representation signal in a way known per se.

The noise generating units do not have to be separate units, but alternatively, they can be included in one unit only, provided that two signal strength representation signals can be generated. Also, they can be integrated with the receiver unit instead of being linked thereto as described.

In a signal combining unit 114, the first and second signal strength representation signals R₁, R₂ are combined, preferably added, step 210 to a third signal strength representation signal R₃. This third signal strength representation signal R₃ is transmitted to a user output provided for link check, preferably as an audible noise signal transmitted to the user of a portable communication device comprising the link check device according to the invention.

In this way, noise will appear to a user as receiver noise comparable to prior analog systems (for instance NMT 450) in which a user could hear noise decreasing when he/she moved to a more favourable location as regards radio signal conditions. However, also in prior analog systems only down-link noise could be heard, which as described earlier is often of little help since the up-link is typically the weakest point.

Alternatively, according to another embodiment of the invention, the third signal R₃ representing overall signal strength of both down-link as well as uplink can be presented for the user in some other way than as an audible noise signal. For instance, some visual means may be provided instead or as a complement to the audible representation, even if this solution is typically less suitable for the user than the audible alternative which is preferred.

According to a preferred embodiment of the invention, the portable communication device, comprising the link check device is a cellular telephone, a smart-phone or a PDA.

The invention is characterised in that both uplink as well as down-link transmission are monitored to help the user to find a better location having both links optimised. Of course, if conditions are too bad, even moving from one location to another might not help, but nevertheless in most or at least many situations the invention will help the user to find a better location. An example could be a situation where the user has a headset connected to a cellular phone, whereby he/she can move the cellular phone just a little bit to improve radio conditions. Besides improving radio conditions, the invention is also applicable to save battery as a consequence of less transmitting power required for the uplink. Thus, a user can use this invention to save battery as well.

Other situations when the invention may not be able to help the user are for instance fast fading conditions such as those that occurs during driving typically at high speed. In these cases, radio conditions change too fast. In a embodiment of the invention additional circuits are added to inhibit the function according to the invention in those conditions. Thus, the invention is most suitable for a user standing still, but is not limited to this.

According to the above described embodiment of the present invention radio communication between the base station and the mobile is effected typically using TDMA/FDMA. However, this is by no means intended to limit the invention in any sense, since communication could also be effected for instance by means of CDMA or any other suitable technique. In the following, the term "down-link" refers to the radio transmission of information bearing signals from the base station to the mobile station. Similarly, the term "uplink", refers to the radio transmission of information bearing signals from the mobile stations to the base station.

It is emphasized that this invention can be varied in many ways, of which the alternative embodiments below only are examples of a few. These different embodiments are hence non-limiting examples. The scope of this present invention, however, is only limited by the subsequently following patent claims.

The portable communication device can be any one of a variety of device like a personal digital assistant (PDA), a cellular phone,

## Claims

1. A method for communication link check in a portable communication device, said method comprising the steps of:
- receiving information including power control commands from a base station on a first link (202);
- monitoring said first link for base station signal strength and power control commands (204);
- providing a first signal strength representation signal based on base station signal strength (206);
- providing a second signal strength representation signal based on the power control commands (208); and
- combining (210) said first and second representation signals (R₁, R₂) to provide a third signal strength representation signal (R₃)
**characterized in** the step of
- transmitting the third signal strength representation signal (R₃) as audible noise to a user presentation unit within the portable communication device for communication link check (212), such that a user of the portable communication device can find that the third signal strength representation signal (R₃) decreases when the user moves to a more favourable location as regards both up-link and down-link radio signal conditions.

2. Method according to claim 1, wherein said first and second signal strength representation signals (R₁, R₂) are noise signals.

3. Method according to claim 2, wherein the step of combining (210) said first and second signal strength representation signals (R1, R2) includes adding said noise signals.

4. Method according to claim 3, wherein said third signal (R₃) is presented visually also.

5. Communication link check device for a portable electronic device, said communication link check device (102) comprising:
- a receiver unit (104) provided for receiving information including a power control signal from a base station on a first link;
- a monitoring unit (108) connected to said receiver unit (104) for monitoring said first link (109) for base station signal strength and power control;
- a first signal generating unit (110) connected to said receiver unit (104), said first signal generating unit being arranged to provide a first signal strength representation signal (R₁) based on the base station signal strength;
- a second signal generating unit (112) connected to said receiver unit (104), said second signal generating unit (112) being arranged to provide a second signal strength representation signal (R₂) based on the power control signal;
- a combining unit (114) connected to said first and second signal generating units (110, 112) arranged to combine the first and second signal strength representation signals (R₁, R₂) to a third signal strength representation signal (R3);
**characterized in that** the communication link check device (102) comprises:
- a control unit (103) connected to the receiver unit (104), first and second signal generating units (110, 112) and combining unit (114) for control thereof and being arranged to provide the third signal (R₃) as audible noise to a user presentation unit within the portable communication device for communication link check, such that a user of the portable communication device can find that the third signal strength representation signal (R₃) decreases when the user moves to a more favourable location as regards both up-link and down-link radio signal conditions.

6. Communication link check device according to claim 5, wherein said first and second signal generating units (110, 112) are noise generating units.

7. Communication link check device according to any one of the claims 5-6, wherein the user presentation unit (120) is an audio user output and/or a visual presentation unit.

8. Portable communication device comprising:
a communication link check device according to claim 5.

9. Portable communication device according to claim 8, wherein the portable communication device (102) is a cellular telephone.

## Patentansprüche

1. Ein Verfahren zur Prüfung einer Kommunikationsverbindung in einem tragbaren Kommunikationsgerät, wobei das Verfahren die folgenden Schritte umfasst:
- Empfangen von Informationen einschließlich Leistungssteuerungsbefehlen von einer Basisstation auf einer ersten Verbindung (202);
- Überwachen der ersten Verbindung auf die Signalstärke der Basisstation und die Leistungssteuerungsbefehle (204);
- Bereitstellen eines ersten Darstellungssignals der Signalstärke basierend auf der Signalstärke (206) der Basisstation;
- Bereitstellen eines zweiten Darstellungssignals der Signalstärke basierend auf den Leistungssteuerungsbefehlen (208); und
- Kombinieren (210) der ersten und zweiten Darstellungssignale (R₁, R₂), um ein drittes Darstellungssignal (R₃) der Signalstärke bereitzustellen,
**gekennzeichnet durch** den Schritt des
- Übertragens des dritten Darstellungssignals (R₃) der Signalstärke als hörbares Geräusch an eine Benutzerdarstellungseinheit in dem tragbaren ICommunikationsgerät zur Prüfung (212) der Kommunikationsverbindung, so dass ein Benutzer des tragbaren Kommunikationsgeräts erfahren kann, dass das dritte Darstellungssignal (R₃) der Signalstärke abnimmt, wenn der Benutzer sich in Richtung eines günstigeren Ortes hinsichtlich der Uplink- und auch der Downlink-Funksignalbedingungen bewegt.

2. Verfahren gemäß Anspruch 1, wobei das erste und das zweite Darstellungssignal (R₁, R₂) der Signalstärke Geräuschsignale sind.

3. Verfahren gemäß Anspruch 2, wobei der Schritt des Kombinierens (210) des ersten und zweiten Darstellungssignals (R₁, R₂) der Signalstärke das Addieren der Geräuschsignale beinhaltet.

4. Verfahren gemäß Anspruch 3, wobei das dritte Signal (R₃) auch visuell dargestellt wird.

5. Vorrichtung zum Prüfen der Kommunikationsverbindung für ein tragbares Elektronikgerät, wobei die Vorrichtung zum Prüfen der Kommunikationsverbindung (102) umfasst:
- eine Empfängereinheit (104), die zum Empfangen von Informationen einschließlich eines Leistungssteuerungssignals von einer Basisstation auf einer ersten Verbindung vorgesehen ist;
- eine Überwachungseinheit (108), die mit der Empfängereinheit (104) zum Überwachen der ersten Verbindung (109) auf die Signalstärke und des Leistungssteuerungssignals der Basisstation verbunden ist;
- eine erste Signalerzeugungseinheit (110), die mit der Empfängereinheit (104) verbunden ist, wobei die erste Signalerzeugungseinheit angeordnet ist, um ein erstes Darstellungssignal (R₁) der Signalsstärke basierend auf der Signalstärke der Basisstation bereitzustellen;
- eine zweite Signalerzeugungseinheit (112), die mit der Empfängereinheit (104) verbunden ist,
wobei die zweite Signalerzeugungseinheit (112) angeordnet ist, um ein zweites Darstellungssignal (R₂) der Signalstärke basierend auf dem Leistungssteuerungssignal bereitzustellen;
- eine Kombinationseinheit (114), die mit den ersten und zweiten Signalerzeugungseinheiten (110, 112) verbunden ist, die angeordnet sind, um das erste und zweite Darstellungssignal (R₁, R₂) der Signalstärke zu einem dritten Darstellungssignal (R₃) der Signalstärke zu kombinieren;
**dadurch gekennzeichnet, dass**
die Vorrichtung (102) zur Prüfung der Kommunikationsverbindung umfasst:
- eine Steuereinheit (103), die mit der Empfängereinheit (104), den ersten und zweiten Signalerzeugungseinheiten (110, 112) und einer Kombinationseinheit (114) zur Steuerung derselben verbunden und angeordnet ist, um das dritte Signal (R₃) als hörbares Geräusch einer Benutzerdarstellungseinheit in dem tragbaren Kommunikationsgerät zur Prüfung der Kommunikationsverbindung bereitzustellen, so dass ein Benutzer des tragbaren Kommunikationsgeräts erfahren kann, dass das dritte Darstellungssignal (R₃) der Signalstärke abnimmt, wenn sich der Benutzer in Richtung eines günstigeren Ortes hinsichtlich der Uplink- und auch Downlink-Funksignalbedingungen bewegt.

6. Vorrichtung zum Prüfen der Kommunikationsverbindung gemäß Anspruch 5, wobei die erste und zweite Signalerzeugungseinheit (110, 112) Geräuscherzeugungseinheiten sind.

7. Vorrichtung zum Prüfen der Kommunikationsverbindung gemäß einem der Ansprüche 5-6, wobei die Benutzerdarstellungseinheit (120) eine Audiobenutzerausgabeeinheit und/oder eine visuelle Benutzerausgabeeinheit ist.

8. Tragbares Kommunikationsgerät, umfassend:
eine Vorrichtung zum Prüfen der Kommunikationsverbindung gemäß Anspruch 5.

9. Tragbares Kommunikationsgerät gemäß Anspruch 8, wobei das tragbare Kommunikationsgerät (102) ein Mobiltelefon ist.

## Revendications

1. Procédé de vérification de liaison de communication dans un dispositif de communication portable, ledit procédé comprenant les étapes consistant à :
recevoir des informations comprenant des instructions de commande de la puissance d'une station de base sur une première liaison (202) ;
surveiller sur ladite première liaison l'intensité du signal de la station de base et les instructions de commande de la puissance (204) ;
fournir un premier signal de représentation de l'intensité du signal, sur la base de l'intensité du signal de la station de base (206) ;
fournir un deuxième signal de représentation de l'intensité du signal, sur la base des instructions de commande de la puissance (208) ; et
combiner lesdits premier et deuxième signaux de représentation (R₁, R₂) pour fournir un troisième signal de représentation de l'intensité du signal (R₃) ;
**caractérisé par** l'étape consistant à :
émettre le troisième signal de représentation de l'intensité du signal (R₃) sous la forme d'un bruit audible vers une unité de présentation à l'utilisateur au sein du dispositif de communication portable, pour la vérification de la liaison de communication (212), si bien qu'un utilisateur du dispositif de communication portable peut déterminer que le troisième signal de représentation de l'intensité du signal (R₃) décroît lorsque l'utilisateur se déplace vers un endroit plus favorable en termes de conditions du signal radio, tant montant que descendant.

2. Procédé selon la revendication 1, dans lequel lesdits premier et deuxième signaux de représentation de l'intensité du signal (R₁, R₂) sont des signaux de bruit.

3. Procédé selon la revendication 2, dans lequel l'étape de combinaison (210) desdits premier et deuxième signaux de représentation de l'intensité du signal (R₁, R₂) comprend l'addition desdits signaux de bruit.

4. Procédé selon la revendication 3, dans lequel ledit troisième signal (R₃) est également présenté visuellement.

5. Dispositif de vérification de liaison de communication pour un dispositif de communication portable, ledit dispositif de vérification de liaison de communication comprenant :
une unité de réception (104) prévue pour recevoir d'une station de base des informations comprenant un signal de commande de la puissance sur une première liaison ;
une unité de surveillance (108), connectée à ladite unité de réception (104), pour surveiller sur ladite première liaison (109) l'intensité du signal de la station de base et la commande de la puissance ;
une première unité de production de signal (110), connectée à ladite unité de réception (104), ladite première unité de production de signal étant conçue pour fournir un premier signal de représentation de l'intensité du signal (R₁), sur la base de l'intensité du signal de la station de base ;
une deuxième unité de production de signal (112), connectée à ladite unité de réception (104), ladite deuxième unité de production de signal (112) étant conçue pour fournir un deuxième signal de représentation de l'intensité du signal (R₂), sur la base du signal de commande de la puissance ; et
une unité de combinaison (114), connectée auxdites première et deuxième unités de production de signaux (110, 112), conçue pour combiner les premier et deuxième signaux de représentation (R₁, R₂) pour fournir un troisième signal de représentation de l'intensité du signal (R₃) ;
**caractérisé en ce que** le dispositif de vérification de liaison de communication (102) comprend :
une unité de commande (103), connectée à l'unité de réception (102), aux première et deuxième unités de production de signaux (110, 112) et à l'unité de combinaison (114) afin de les commander, et conçue pour fournir le troisième signal (R₃) sous la forme d'un bruit audible à une unité de présentation à l'utilisateur au sein du dispositif de communication portable pour la vérification de la liaison de communication, afin qu'un utilisateur du dispositif de communication portable puisse déterminer que le troisième signal de représentation de l'intensité du signal (R₃) décroît lorsque l'utilisateur se déplace vers un endroit plus favorable en termes de conditions du signal radio, tant montant que descendant.

6. Dispositif de vérification de liaison de communication selon la revendication 5, dans lequel lesdites première et deuxième unités de production de signaux (110, 112) sont des unités de production de bruit.

7. Dispositif de vérification de liaison de communication selon l'une quelconque des revendications 5 et 6, dans lequel l'unité de présentation à l'utilisateur (120) est une unité de sortie audio vers l'utilisateur et/ou une unité de présentation visuelle.

8. Dispositif de communication portable comprenant un dispositif de vérification de liaison de communication selon la revendication 5.

9. Dispositif de communication portable selon la revendication 8, dans lequel le dispositif de communication portable (102) est un téléphone cellulaire.
